Europäisches Patentamt

European Patent Office

Office européen des brevets

(19)

(11) Publication number: **0 152 198 B1**

# EUROPEAN PATENT SPECIFICATION

(12)

(45) Date of publication of patent specification: **23.10.91**   (51) Int. Cl.⁵: **G07F 7/00,** G07F 15/00

(21) Application number: **85300455.4**

(22) Date of filing: **24.01.85**

(54) **A prepayment system.**

(30) Priority: **25.01.84 GB 8401932**

(43) Date of publication of application:
**21.08.85 Bulletin 85/34**

(45) Publication of the grant of the patent:
**23.10.91 Bulletin 91/43**

(84) Designated Contracting States:
**AT BE CH DE FR IT LI NL SE**

(56) References cited:
**EP-A- 0 063 893        DE-A- 2 451 289
GB-A- 2 066 736        US-A- 4 162 530
US-A- 4 218 011        US-A- 4 249 071**

(73) Proprietor: **SCHLUMBERGER INDUSTRIES
LIMITED
124 Victoria Road
Farnborough Hampshire, GU14 7PW(GB)**

(72) Inventor: **Vaughan, John Edward
37 Glemsford Close
Felixstowe Suffolk IP11 8UQ(GB)**
Inventor: **Lucking, Keith Frederick C.
73 Glemsford Close
Felixstowe Suffolk IP11 8UQ(GB)**

(74) Representative: **Pears, David Ashley et al
REDDIE & GROSE 16 Theobalds Road
London WC1X 8PL(GB)**

## Description

The present invention relates to a prepayment system for a metered commodity, comprising a receptacle for a key, the receptacle having a circuit for reading data from a memory in a key inserted in the receptacle and for allowing access to the commodity only when authorized by predetermined authorizing data read from a key memory. The user carries a key which he inserts in the receptacle when he wishes to obtain access to the commodity.

In known prepayment systems of this type, (e.g. telephone prepayment systems using a magnetic card key) the key memory stores a quantity code specifying the user's allowance, that is the quantity of the commodity to which the user is allowed access. When a user places a key in the receptacle, the quantity code is read and access to the commodity is allowed either until the user's allowance is exhausted, or until the user terminates the access. A new quantity code specifying the quantity of the user's allowance still remaining, which may be zero, is then stored in the key memory before the user removes the key from the receptacle.

There is a problem of security with a system operating in this way. Anybody who makes a copy of a key, including the contents of the key memory, can gain access to a quantity of the commodity for which he has not paid. Copying can be discouraged by the use of a structurally complex key which is difficult and expensive to manufacture, but the costs of the genuine manufacturer will be similarly increased. A key for a system operated as described above could always, in principle, be copied by a determined, fraudulent user.

A further problem arises from the need for the receptacle circuit to write data to the key memory at the end of each session of use. If the system is disturbed while data is being written into the key memory, for instance by a user trying to remove the key from the receptacle too soon, the data stored in the key memory when the key is eventually removed may be meaningless, or may not truly represent the amount of the user's allowance still remaining. Accordingly, an honest user may accidentally stop himself gaining access to the full quantity for which he has paid.

There is a need for a prepayment system which prevents any additional benefit accruing to a fraudulent key copier, and which prevents honest users accidentally losing their allowance.

A prepayment system for a metered commodity according to the present invention comprises a key with a memory, and a receptacle for the key with a circuit for allowing access to the commodity only when authorised by predetermined data in the key memory, in which the data in the key memory is unique to the corresponding receptacle and includes pass number data and a code determining the quantity of the metered commodity to which access is allowed, and the receptacle circuit includes a receptacle memory which tests the pass number data stored in the key according to a checking rule against pass number data previously stored in the receptacle memory, and responds only to the first insertion of the key to store data representing the said quantity, characterized in that the data in the key memory is unique to the key, and the receptacle memory responds only to that first insertion to store the pass number data of the key in the receptacle memory.

Prepayment systems are known, for example, in GB 2066736A in which identifying and quantity data are both encoded on a key. The identifying data is checked with other data stored in a receptacle circuit.

It will be appreciated that the receptacle does not need to write any quantity data to the memory of a key inserted in the receptacle; preferably the receptacle does not write any data into a key memory. The above mentioned problems associated with data writing are thus avoided. Furthermore, the system preferably also responds to the first insertion lasting less than a predetermined time as it does to the subsequent insertions and/or to an insertion lasting in excess of the predetermined time, i.e. the first insertion both sets the paid quantity into the receptacle memory and effects the first decrementing of this quantity and concomitant setting of the metering device. In a system according to the invention a copy of a genuine key cannot be used to gain access to a quantity of the commodity which has not been paid for. While it is impossible to distinguish between a genuine key and a perfect copy of it, a code specifying the quantity of commodity to which access is allowed is only written into the receptacle memory on the first insertion of a key (or its copy). A subsequent insertion of the key or its copy cannot be used falsely to increase the user's allowance, because each subsequent insertion serves only to decrement the quantity to which access is allowed, and to allow access to a predetermined quantity of the commodity.

One exemplary embodiment of the prepayment system according to the invention and embodying the security system according to the invention will now be described with reference to the accompanying drawings in which:

Fig 1 is a block diagram of the system, and

Fig 2 is a simplified flow diagram of the operations of the microcomputer shown in Fig 1.

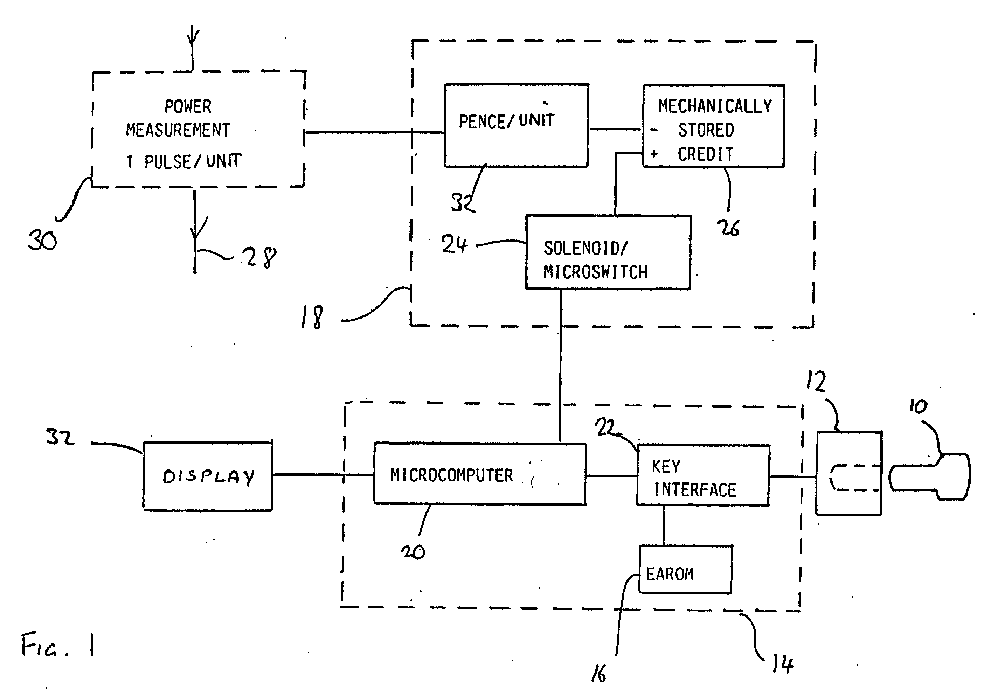

Fig 1 shows a prepayment system for metered electricity. The system comprises a key 10 with a memory and a receptacle 12 for the key 10. Associated with the receptacle 12 is a receptacle circuit 14 for allowing access to the electricity only when authorized by predetermined data in the key memory. The data in the key memory is unique to the key 10 and to the corresponding receptacle 12 and includes a code specifying the quantity of electricity to which access is allowed, that is, the amount which has been paid for in advance. The receptacle circuit 14 includes a receptacle memory 16. On the first insertion of the key 10 into the receptacle 12, the memory 16 stores data representing the quantity of electricity which has been paid for in advance.

The quantity data is stored in assocation with data identifying the key 10. On subsequent insertions of the key 10, and/or when an insertion lasts more than a predetermined time, the quantity data is modified so as to decrement the represented quantity of electricity by a predetermined amount and a metering device 10 is set to allow the supply of the predetermined amount of electricity.

The key 10 has a read/write memory which, for convenience, is an EAROM. When the key 10 is inserted in the receptacle 12, a microcomputer 20 can read the contents of the key memory through an interface circuit 22 and thereby through terminals within the receptacle which make contact with terminals on the outside of the key 10, connected to the address and data lines of the key memory.

The key memory contains three items of control data, in addition to the quantity data.

The three control data items are known as KEY NUMBER, KEYMETER NUMBER and KEYPASS. KEY NUMBER is unique to the key and may be simply a serial number for the key or may incorporate encoded information such as the retail outlet from which the key was bought or the date on which it was bought. KEYMETER NUMBER is unique to the meter apparatus and again may simply be a serial number or may be encoded information such as the address at which the meter is installed. The nature and function of KEYPASS will be described later.

On the first insertion of the key 10 into the receptacle 12, the microcomputer stores in the memory 16 data representing the three control data items and the quantity data. This process may be a direct transfer of data from the key memory to the receptacle memory 16, or the data may be processed by the microcomputer, before storage. Conveniently, the receptacle memory 16 is also an EAROM.

The quantity data in the memory 16 is then modified to decrement the represented data by a predetermined amount, and the metering device 18 is set to allow the predetermined amount of electricity to flow along the supply line 28.

The metering device 18 is identical to a coin-operated prepayment device except that the coin-accepting device is replaced by a solenoid circuit 24 which is operated by the microcomputer 20. When the solenoid circuit 24 is operated, the user must turn a knob to set a mechanical device 26 to represent the value of the predetermined amount of electricity, in the same way that a knob is turned in well known coin-operated devices, after a coin has been inserted. The electricity supplied along the power line 28 is measured by a power measurement device 30 which provides a pulse to a tariff circuit 32 each time one unit of power (for instance one kilowatt-hour) is consumed along the line 28. The tariff circuit 32 converts the power units into monetary units and partially resets the device 26 each time electricity of a convenient monetary value has been used. When the device 26 is finally reset to its original condition, the electricity supply along the line 28 is cut off, by conventional means not shown.

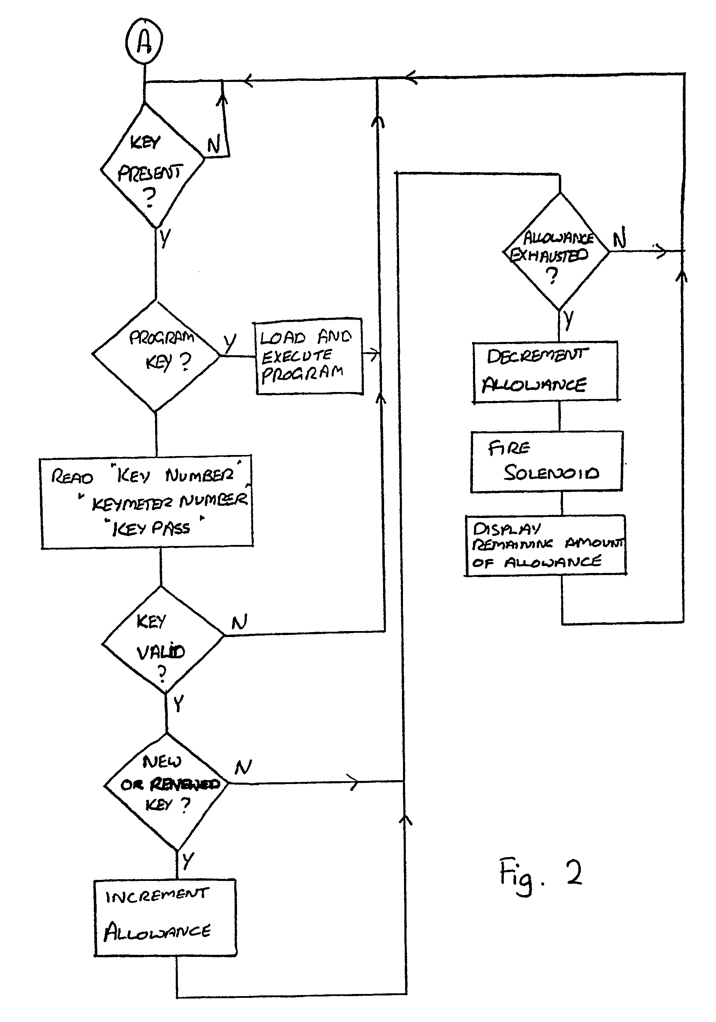

In order to be able to use more electricity, the user must now again insert his key 10 into the receptacle 12. Fig 2 shows the sequence of operations of the microcomputer 20 when a key is inserted. On detecting the presence of a key, the microcomputer 20 determines if the key is a program key, which would be carried by a maintenance worker, and would contain a program for testing for faults in the system. If the key is a program key, the program is loaded into the microprocessor and executed and the microprocessor returns to the beginning of the cycle shown in Fig 2 unless a fault has been detected, when the worker must take appropriate action to remedy the fault.

If the key is a normal key the KEYMETER NUMBER contained in the key memory is compared with the value stored in the memory 16 corresponding to the receptacle in use. If this data item is satisfactory, the KEY NUMBER and KEYPASS items are read from the key memory. If they both correspond to the appropriate data items already stored in the memory 16, the insertion is not a first insertion of a key. The microprocessor then reads the quantity data in the memory 16 and if this indicates that the user's allowance is not exhausted, the microprocessor again modifies the quantity data to decrement the quantity allowed by a predetermined amount and sets the metering device by operation of the solenoid 24 to allow the predetermined amount of electricity to be used. The microprocessor then returns to the beginning of its sequence, at A. If the key has not been removed from the receptacle when the microprocessor returns to the beginning of its sequence, that is, if the insertion lasts longer than a predetermined time, which is the duration of the microprocessor sequence, the sequence is executed again, and the metering device is again set, if appropriate.

On each subsequent insertion of the same key, the sequence of events just described occurs, until the microprocessor finds that the contents of the memory 16 indicate that the user's full allowance of electricity has been used and no more is allowed.

If the microcomputer finds that the KEYPASS data item differs from that stored in the memory 16, but that the items KEY NUMBER and KEYMETER NUMBER are the same as those stored in the memory 16, the microprocessor tests to see if the new KEYPASS item ($KEYPASS_{n+1}$) is related to the old KEYPASS item ($KEYPASS_n$) by a first predetermined function g. That is, the microcomputer tests for the conditions $KEYPASS_{n+1}$ = g ($KEYPASS_n$). Compliance with this condition indicates that the user has paid for a further amount of electricity given by the quantity code in the key memory. Accordingly, the quantity data stored in the memory is modified to increment the quantity of electricity allowed by the amount indicated by the quantity code in the key memory. The new KEYPASS item is written into the memory 16 over the corresponding old item.

If the microcomputer finds that the KEYPASS and KEY NUMBER items stored in a key both differ from those stored in the memory 16, the items are tested to see if they are related by a second predetermined function f, that is, if KEYPASS = f(KEY NUMBER). This condition indicates that a lost key has been replaced by a newly purchased key. In this case, the new KEYPASS and KEY NUMBER items are written over the corresponding, existing items in the memory 16 and the quantity data stored in the memory is modified to increment the quantity of electricity allowed by the amount indicated by the quantity data stored in the new key. In this way, the loss of a key does not deny the user the use of any electricity paid for when buying the key which has been lost.

The system further comprises a two digit LED display 32 controlled by the microcomputer. During normal operation, a single segment of the display is illuminated if some of the user's allowance still remains. When an inserted key is accepted by the system, a flashing display is provided. If the key is found invalid, for instance because it is being used in the wrong meter, the display shows the letter "X".

When the system accepts a key and finds that the key is not being inserted for the first time and that the quantity data stored in the memory 16 indicates that the user's allowance is not exhausted, the display shows for a short period (5 seconds) the quantity still available to the user. If the key is removed during this period, the system returns to its normal state. indicating if any of the allowance remains. If the key remains in the receptacle, the system operates the solenoid circuit 24 and displays the word "IN". The display reverts to showing the quantity represented by the quantity data in the memory 16 (now decremented) for a period of ten seconds.

If the key remains in the receptacle at the end of this period the system recommences the sequence of operations for testing the key and setting the device 26. Otherwise, or if the key remaining in the receptacle is tested and the user's allowance is found to be exhausted, the display reverts to normal operation.

When a valid key is inserted, but the system finds that the user's allowance is exhausted, the display shows "NO". The user must then purchase a new key, or renew his present key by having the quantity data and KEYPASS data changed, in accordance with the function g(KEYPASS), and on paying the charge for further electricity.

A lost key can be replaced by a new key which must store KEYPASS data related to its KEYNUMBER data by the function f.

It may be desirable for some uses to provide an emergency facility, whereby the metering device 18 can be set after the allowance is exhausted. When this facility is used, an excess allowance can be entered once, of a size which may be set by the electricity supplier and which may differ for different users. The display shows the size of the allowance entered, prefixed by a negative sign. The excess allowance is then used in the normal way except that the excess allowance can only be decremented once by a single key insertion. The key must be removed and reinserted to further decrement the excess allowance. When the excess allowance is used up, no further electricity can be obtained without a new or renewed key being used. On the first insertion of a new or renewed key the system amends the quantity data in the memory to take account of the use of the emergency facility.

It is clear from the above description that the system is very secure. Each key is usable in only one receptacle so that an authorised user cannot obtain electricity through another user's system. Even if the functions f and g are discovered by an unauthorised person, mass production of false keys is not possible, because the data written into the memory of each key must be related to the receptacle in which it is to be used and the history of the receptacle circuit (that is, the KEYPASS and KEYNUMBER items at present stored in the receptacle memory 16). An exact duplicate of a genuine key gives no further credit. In addition to the use of functions f and g, the data items in the key memory could be encoded in some way, possibly by combining all the data in the key memory into a single data item. Of course, the receptacle circuit must know in advance what encoding is used.

The function f and g could use data stored in the receptacle memory and unique to that receptacle. The functions can be arbitrarily complicated so that the sequence of KEYPASS items used will appear random.

Errors are greatly reduced by the avoidance of the need to write data to the key. Check data can be stored in the memory to enable read data to be checked for error, as is customary in the data processing art.

Although the metering device 18 described is electro-mechanical, a wholly electronic device could be used in its place.

The system described above controls the supply of electricity, but clearly could be used with an appropriate metering device to control access to any commodity. Many variations to the described sequence of operation of the display could be devised and used.

The key has been described as comprising an electronic memory. This is convenient because interfacing to electronic control circuitry is straightforward, and new data can quite simply be written into the memory for renewing the key. However, any type of storage medium could be used, provided that the receptacle comprises suitable means for reading the contents of the memory. Furthermore, while the term "key" is used throughout this specification, the physical shape of the key need not resemble the shape of a key for a mechanical lock. A key with an electronic memory is commercially available which does resemble this shape, so that its look and use are familiar to users, but the key could be, for instance, a plastic card, similar to a credit card, with a memory in the form of a magnetic strip on the surface of the card. The receptacle preferably has some form of hole, slot or other cavity into which the key is inserted but this is not essential and the expression insertion of a key into a receptacle is intended to cover any form of bringing a key into cooperative relationship with a complementary structure, called a receptacle.

## Claims

1. A prepayment system for a metered commodity comprising a key (10) with a memory, and a receptacle (12) for the key (10) with a circuit (14) for allowing access to the commodity only when authorised by predetermined data in the key memory, in which the data in the key memory is unique to the corresponding receptacle (12) and includes pass number data and a code determining the quantity of the metered commodity to which access is allowed, and the receptacle circuit (14) includes a receptacle memory (16) which tests the pass number data stored in the key (10) according to a checking rule against pass number data previously stored in the receptacle memory (16), and responds only to the first insertion of the key (10) to store data representing the said quantity, characterized in that the data in the key memory is unique to the key (10), and the receptacle memory (16) responds only to that first insertion to store the pass number data of the key in the receptacle memory (16).

2. A system according to claim 1, characterized in that the receptacle circuit (14) responds to each subsequent insertion of the key (10) corresponding to identifying data and/or to an insertion of the said key lasting in excess of a predetermined time, both to modify the quantity data so as to decrement the quantity by a predetermined amount and to set or to permit the setting of a metering device (18) to allow access to the predetermined amount of the metered commodity.

3. A system according to claim 2, characterized in that the system also responds to the first insertion of the key (10) lasting less than the predetermined time as it does to subsequent insertions and/or to an insertion lasting in excess of the predetermined time.

4. A system according to any of claims 1 to 3, characterized in that the receptacle (12) does not write data into the key memory.

5. A system according to any of claims 1 to 4, characterized in that the key memory is a semiconductor memory.

6. A system according to any of claims 1 to 5, characterized in that the receptacle circuit (14) detects the first insertion of the key (10) when the pass data read from the key (10) is related in a predetermined way to other data read from the key (10).

7. A system according to claim 6, characterized in that the said other data is data identifying the key (10).

## Revendications

1. Système de prépaiement pour article taxé comprenant une clé (10) munie d'une mémoire, un réceptacle (12) pour la clé (10) avec un circuit (14) pour ne permettre l'accès à l'article que lorsque cela est autorisé par une donnée prédéterminée se trouvant dans la mémoire de la clé, dans lequel la donnée se trouvant dans la mémoire de la clé est unique au réceptacle correspondant (12) et comporte une donnée de numéro de passe et un code déterminant la quantité de l'article taxé à laquelle un accès est autorisé, et dans lequel le circuit (14) du réceptacle comporte une mémoire de réceptacle (16) qui teste la donnée de numéro de passe stockée dans la clé (10) conformément à une règle de vérification par comparaison à une donnée de numéro de passe précédemment stockée dans la mémoire de réceptacle (16), et ne répond qu'à la première insertion de la clé (10) pour stocker une donnée représentant ladite quantité, caractérisé en ce que la donnée se trouvant dans la mémoire de la clé est unique à la clé (10) et en ce que la mémoire de réceptacle (16) ne répond qu'à cette première insertion pour stocker la donnée de numéro de passe de la clé dans la mémoire de réceptacle (16).

2.  Système selon la revendication 1, caractérisé en ce que le circuit (14) du réceptacle répond à chaque insertion ultérieure de la clé (10) qui correspond à une identification de données et/ou à une insertion de ladite clé pendant une durée dépassant un temps prédéterminé, à la fois pour modifier la donnée de quantité de façon à décrémenter cette quantité d'une valeur prédéterminée et pour régler ou permettre de régler un dispositif de taxation (18) afin de permettre un accès à la quantité prédéterminée de l'article taxé.

3.  Système selon la revendication 2, caractérisé en ce qu'il répond également à la première insertion de la clé (10) pendant une durée inférieure au temps prédéterminé, de la même manière que dans le cas d'insertions ultérieures et/ou d'une insertion d'une durée dépassant le temps prédéterminé.

4.  Système selon l'une quelconque des revendications 1 à 3, caractérisé en ce que le réceptacle (12) n'écrit pas de donnée dans la mémoire de la clé.

5.  Système selon l'une quelconque des revendications 1 à 4, caractérisé en ce que la mémoire de la clé est une mémoire à semiconducteur.

6.  Système selon l'une quelconque des revendications 1 à 5, caractérisé en ce que le circuit (14) du réceptacle détecte la première insertion de la clé (10) lorsque la donnée de passe lue dans la clé (10) est liée d'une façon prédéterminée à une autre donnée lue dans la clé (10).

7.  Système selon la revendication 6, caractérisé en ce que ladite autre donnée est une donnée identifiant la clé (10).

**Patentansprüche**

1.  Vorausbezahlungssystem für eine gemessene Ware, wobei das System einen Schlüssel (10) mit einem Speicher sowie eine Aufnahme (12) für den Schlüssel (10) mit einem Schaltkreis (14) besitzt, um einen Zugriff zur Ware nur dann zu ermöglichen, wenn eine Berechtigung durch vorgegebene Daten im Schlüsselspeicher vorhanden ist, wobei die Daten im Schlüsselspeicher für die entsprechende Aufnahme (12) eindeutig sind und Paßnummern-Daten sowie einen Kode aufweisen, der die Menge der gemessenen Ware festlegt, zu der ein Zugriff gestattet ist, und wobei der Aufnahmeschaltkreis (14) einen Aufnahmespeicher (16) aufweist, der die Paßnummern-Daten, die im Schlüssel (10) gespeichert sind, gemäß einer Prüfregel gegenüber den Paßnummern-Daten prüft, die früher im Aufnahmespeicher (16) gespeichert wurden, wobei er nur auf das erste Einsetzen des Schlüssels (10) anspricht, um Daten zu speichern, die die Menge kennzeichnen, dadurch gekennzeichnet, daß die Daten im Schlüsselspeicher für den Schlüssel (10) eindeutig sind, und daß der Aufnahmespeicher (16) nur auf das erste Einsetzen anspricht, um die Paßnummern-Daten des Schlüssels im Aufnahmespeicher (16) zu speichern.

2.  System gemäß Anspruch 1, dadurch gekennzeichnet, daß der Aufnahmeschaltkreis (14) auf jedes weitere Einsetzen des Schlüssels (10), das den Erkennungsdaten entspricht, und/oder das Einsetzen eines Schlüssels anspricht, das länger als eine vorgegebene Zeit dauert, um sowohl die Mengendaten zu verändern, als auch die Menge um einen vorgegebenen Wert herabzusetzen, und eine Meßeinrichtung (18) einzustellen oder deren Einstellung zu ermöglichen, um einen Zugriff zu einer vorgegebenen Menge der gemessenen Ware zuzulassen.

3.  System gemäß Anspruch 2, dadurch gekennzeichnet, daß das System weiters auf das erste Einsetzen des Schlüssels (10) anspricht, das kürzer als die vorgegebene Zeit dauert, so wie dies beim weiteren Einsetzen und/oder einem Einsetzen der Fall ist, das länger als die vorgegebene Zeit dauert.

4. System gemäß jedem der Ansprüche 1 bis 3, dadurch gekennzeichnet, daß die Aufnahme (12) keine Daten in den Schlüsselspeicher einschreibt.

5. System gemäß jedem der Ansprüche 1 bis 4, dadurch gekennzeichnet, daß der Schlüsselspeicher ein Halbleiterspeicher ist.

6. System gemäß jedem der Ansprüche 1 bis 5, dadurch gekennzeichnet, daß der Aufnahmeschaltkreis (14) das erste Einsetzen des Schlüssels (10) abtastet, wenn die vom Schlüssel (10) ausgelesenen Paßdaten auf eine vorgegebene Art mit anderen Daten in Beziehung stehen, die vom Schlüssel (10) ausgelesen werden.

7. System gemäß Anspruch 6, dadurch gekennzeichnet, daß die anderen Daten jene Daten sind, die den Schlüssel (10) kennzeichnen.

Fig. 1

8

Fig. 2